# EUROPEAN PATENT SPECIFICATION

(11) **EP 3 484 272 B1**
(45) Date of publication and mention of the grant of the patent: **10.03.2021**
(21) Application number: 17755270.0
(22) Date of filing: 13.07.2017
(51) Int. Cl.: A01G 13/02

(54) **A METHOD FOR COATING A PLANT AND A COATED PLANT OBTAINED THEREWITH**
VERFAHREN ZUR BESCHICHTUNG EINER PFLANZE UND DAMIT ERHALTENE BESCHICHTETE PFLANZE
PROCÉDÉ DE REVÊTEMENT D'UNE PLANTE ET PLANTE REVÊTUE OBTENUE AVEC LUI

(30) Priority: 13.07.2016 NL 2017162
(43) Date of publication of application: 22.05.2019
(73) Proprietor: Warmerdam Berg en Daal Beheer B.V., 2215 TE Voorhout (NL)
(72) Inventor: WARMERDAM, Mark Hugo Maria, 2215 TE Voorhout (NL)
(74) Representative: van der Velden, Marc
(86) International application number: PCT/NL2017/050476
(87) International publication number: WO 2018/012976

(56) References cited:
- DE-A1- 19 741 956
- US-A- 2 057 413
- Menchek, Debbie: "Waxed Amaryllis Bulbs: The No Water Flower for the Holidays", , 20 November 2015 (2015-11-20), XP002769542, Retrieved from the Internet: URL:http://www.myrtlebeachonline.com/livin g/home-garden/article45491814.html [retrieved on 2017-04-25]
- MENCHEK ET AL: "Waxed Amaryllis Bulbs: The No Water Flower for the Holidays", INTERNET CITATION, 20 November 2015 (2015-11-20), XP002769542, Retrieved from the Internet: URL:http://www.myrtlebeachonline.com/livin g/home-garden/article45491814.html [retrieved on 2017-04-25]

## Description

### BACKGROUND OF THE INVENTION

The invention relates to a plant coating method and at least partially coated plants obtained therewith.

Coating a plant or part thereof can be done for various reasons. One of the reasons is for temporary protection as for instance disclosed in the German patent publication DE 197 41 956 A1, where roots and stems of a plant are coated to protect the plants from the large pine weevil after planting the plants. An advantage of the coating is that no harmful insecticides have to be used.

Protection is needed the most when the plants are most vulnerable, which is for a predetermined period of time after planting. Further, the plants need to grow, so that the roots will start penetrating the coating after some time, thereby losing its protective function at least partially. Coating plants or part of plants can also be temporarily done for protection during transport.

Another reason for coating a plant is for ornamental reasons. Under the registered trademark "No Water Flowers", flower bulbs are coated to be displayed in-house without using a pot and earth, but only using a support element below the coated flower bulb. The coating can be in different colours and patterns, and other materials may be applied to the coating, e.g. fibres.

However, a drawback of the coated flower bulb is that it needs a separate support element to support the coated flower bulb such that the flowering shoot is directed substantially upwards. Without the support element, the flower bulb may easily roll over such that the flowering shoot is for instance directed sideways, which is not desired.

For the ornamentally coated plant it is preferred that the support element is hidden as much as possible to give the impression that the flower bulb is standing on its own. Therefore the support element is provided below the flower bulb, so that the flower bulb covers the support element as much as possible. To still ensure a proper connection between the flower bulb and the support element, the support element comprises at least one protrusion to be pressed into the underside of the flower bulb thereby damaging the coating and possibly also the flower bulb itself.

### BRIEF SUMMARY OF THE INVENTION

It is an object of the invention to provide a coated plant that is stably supported and preferably does not require a separate support element for the bulb to be displayed in an upright position.

This object is achieved by providing a method for coating a plant, comprising the following steps:
a) providing a clean plant with a stem and roots;
b) coating at least a lower portion of the stem and the roots with a layer of material; and
c) arranging the roots to function as support for the stem;
wherein the layer of material is configured to be impenetrable for the roots.

In the prior art, the roots, which are an integral part of the plant, are removed. The idea is to display the plant without the use of a pot and earth. Roots generally provide support to the plants, but need earth in between and around the roots to provide the necessary strength. As no earth is present, it is the general believe in the prior art that the roots have no function anymore and only stand in the way of supporting the stem. However, the current invention is based on the insight that the roots can still support the stem when coated as the coating provides sufficient strength to 'freeze' the orientation of the roots thereby supporting the stem.

Due to the roots supporting the stem, no separate support element is required anymore and thus also no damage is caused to the coating and/or the plant.

In an embodiment, the stem is part of a bulb, wherein coating comprises coating at least a lower portion of the bulb and the roots with a layer of material, and wherein the step of arranging comprises arranging the roots to function as support for the bulb.

For a plant with a bulb, the object could alternatively be achieved in an obvious manner by flattening out the underside of the bulb, thereby creating a flat support surface. Although this may be advantageous as it may be possible to flatten the bulb and to remove the roots in a single cut or operation, this damages the bulb even more and is therefore not a preferred solution.

Providing a clean plant means that a plant is provided with as much of the earth removed from the stem and roots as possible that usually sticks to the plant after removing the plant from the soil. Hence, loose earth is removed and the roots and stem, or bulb if applicable, are visible for the most part. Coating a clean plant has the advantage that the coating adheres better to the plant and that the chances of weak spots in the coating are reduced.

The coating being impenetrable for the roots ensures that the coating remains intact during flowering. The coating being impenetrable is a proper combination of the type of material and thickness of the layer of material after coating that provides sufficient strength.

This is an important difference with the prior art in which plant parts are coated for protection during transport and/or during the first period after planting. The purpose in these prior art applications is that the plant parts are temporary protected and after some time the coating is penetrated by the roots for further growth. These coatings are thus not suitable to be used as coating in the present invention.

In an embodiment, arranging the roots is done after coating, which has the advantage that coating can be done in a fairly simple manner, e.g. by lowering/dipping the stem, or bulb if applicable, including roots in a vessel filled with liquid coating material.

However, it is also possible to carry out the coating step after arranging the roots, which may have the advantage that there is no time pressure on the arranging step, so that the success rate of a proper support of the stem, or bulb if applicable, may be increased. In that case, coating may for instance be carried out using a spraying technique or other painting-like technique.

In an embodiment, the step of providing a clean plant comprises the step of cleaning the stem, or bulb if applicable, and the roots to remove earth, e.g. using water and/or pressurized air.

In an embodiment, the material used to coat at least the lower portion of the stem, or bulb if applicable, and the roots is a wax.

In an embodiment, the coating step comprises the following steps:
c1) heating the material to above the melting point of the material;
c2) providing the heated material to at least the lower portion of the stem, or bulb if applicable, and the roots; and
c3) solidifying the material by allowing the material to cool to room temperature.

In an embodiment, arranging the roots is carried out during the solidifying step before the material fully solidifies, i.e. arranging is carried out when the material is maleable.

In an embodiment, coating comprises the step of dipping at least a lower portion of the stem, or bulb if applicable, and the roots into a liquid material.

In an embodiment, arranging the roots comprises the step of positioning the roots in a circular pattern with the stem, or bulb if applicable, in the middle seen in plan view.

In an embodiment of the invention, a foil or any other layer of material is provided between the roots and the coating, wherein the foil is configured to prevent the passage of water, but which allows the passage of small molecules as for instance, O₂ and/or N₂ and/or CO and/or CO₂, and wherein the coating provides the strength to support the plant via the roots, which coating may be penetrable for water and/or O₂ and/or N₂ and/or CO and/or CO₂.

The invention also relates to a plant with a stem and roots, wherein at least a lower portion of the stem and the roots are provided with a layer of material, wherein the roots are arranged to support the stem without the aid of a pot or earth, and wherein the layer of material is configured to be impenetrable for the roots.

In an embodiment, the stem is part of a bulb, wherein at least a lower portion of the bulb and the roots are provided with a layer of material, and wherein the roots are positioned to support the bulb.

In an embodiment, the material is wax.

In an embodiment, the roots are positioned in a circular pattern with the stem, or bulb if applicable, in the middle seen in plan view.

It will be apparent for the person skilled in the art that features or embodiments described in relation to the method according to the invention may be equivalently be applied to the plant according to the invention and vice versa, where applicable. Hence, not all features will be unduly repeated here for both types of inventions.

### BRIEF DESCRIPTION OF THE DRAWINGS

The invention will now be described in a non-limiting way with reference to the accompanying drawings in which like parts are indicated by like reference symbols and in which:
- Fig. 1: schematically depicts a clean plant with a bulb and roots;
- Fig. 2: schematically depicts the plant of Fig. 1 when dipped into a wax bath;
- Fig. 3: schematically depicts the plant of Fig. 2 right after being pulled from the wax bath;
- Fig. 4: schematically depicts the plant of Fig. 3 after arranging the roots to function as support for the bulb; and
- Fig. 5: schematically depicts the plant of Fig. 4 in plan view.

### DETAILED DESCRIPTION OF THE INVENTION

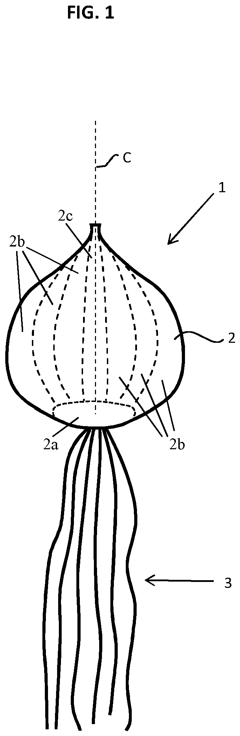

Fig. 1 schematically depicts a plant 1 with bulb 2 and roots 3. The plant 1 may be an Amaryllis, Crinum, Hippeastrum, Narcissus or another member of the amaryllis family Amaryllidaceae, a lily, tulip or another member of the lily family Liliaceae, or may belong to one of two groups of Iris species, family Iridaceae, namely subgenus Xiphium or subgenus Hermodactyloides, or may be an Oxalis in the family Oxalidaceae. The plant may also belong to the genus Allium in the Amaryllidaceae family or belong to the genus Zantedeschia in the Araceae family.

The bulb 2 is formed by a base 2a, i.e. a short stem, with fleshy leaves or leaf bases 2b that function as food organs during dormancy. Plant growth occurs from this basal plate 2a. The roots 3 emerge from the underside of the base 2a and new stems and leaves 2b from the upper side. At the center of the bulb 2, which center is indicated by dashed line C, there is a vegetative growing point or an unexpanded flowering shoot 2c. The stem 2a, leaves 2b and flowering shoot 2c are depicted in dashed lines as if a cross section of the bulb was depicted. In many cases, the stem, leaves, etc., are not distinguishable from the outside.

The roots 3 are schematically depicted. Hence, in practice they may have different dimensions such as thickness and length. Also the number of roots may be different.

The shape of the bulb 2 is also schematically depicted. In practice the bulb 2 may have a different shape. It is common that the shape of the bulb varies significantly, even within the same plant species. In that case, using a separate support element, as is done in the prior art, provides the advantage that it can be designed to be used with a wide variety of bulb shapes and sizes.

In Fig. 1, the plant 1 has been cleaned, meaning that the earth has been removed from the bulb 2 and the roots 3. It is explicitly noted here that a 100% removal of the earth is not required as this may require such extensive cleaning that there is an unacceptable risk of the roots being damaged. Hence, cleaned means that after being removed from the earth, a cleaning step is performed, e.g. using water, compressed air and/or mechanical excitation, such that at least loose earth is removed, and such that the roots and the bulb are visible for the most part.

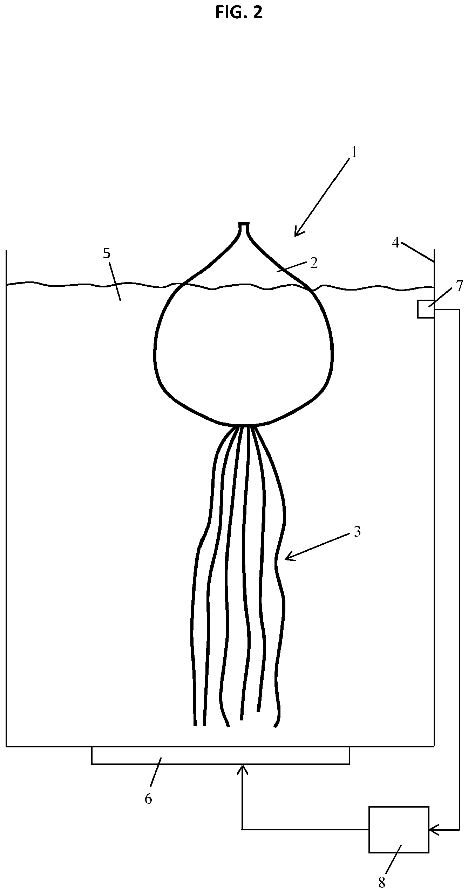

Fig. 2 schematically depicts the cleaned plant 1 including bulb 2 and roots 3 at least partially submerged in a wax bath. The wax bath is formed by a container 4 holding a quantity of coating material, in this embodiment wax 5.

The wax 5 has the property that it is solid at room temperature. The melting temperature may for instance be above 40°C, 45°C or even above 50°C. In order to melt the wax 5, a heater 6 is provided. The heater 6 may be an integral part of the container 4, but may also be a separate element allowing to apply heat to the container 4.

In this embodiment, heat is transferred from the heater 6 to the wax 5 via the container 4, but the heater may also be provided inside the container 4 to transfer heat directly from heater 6 to wax 5.

When the wax 5 has been melted and is in liquid form, the plant may be dipped into the wax bath as shown in Fig. 2. The temperature of the wax bath should be above the melting point, but preferably not too much as a too high temperature of the wax may damage the plant 1 when dipped into the wax bath. Hence, as in this embodiment, the temperature of the wax may be monitored using a temperature sensor 7. Signals representative for the wax temperature are send to a control unit 8, which control unit 8 drives the heater 6 on the basis of a desired temperature and an actual temperature as measured by the temperature sensor 7.

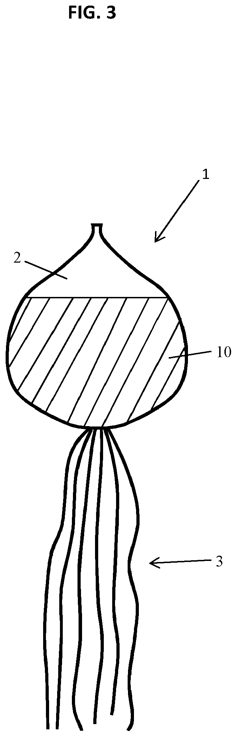

Fig. 3 depicts the plant 1 after being taken out of the container 4 in Fig. 2. A layer of material 10 remains on the plant 1 as coating. Hence, at least a lower portion of the bulb 2 and the roots 3 are provided with the layer of material 10.

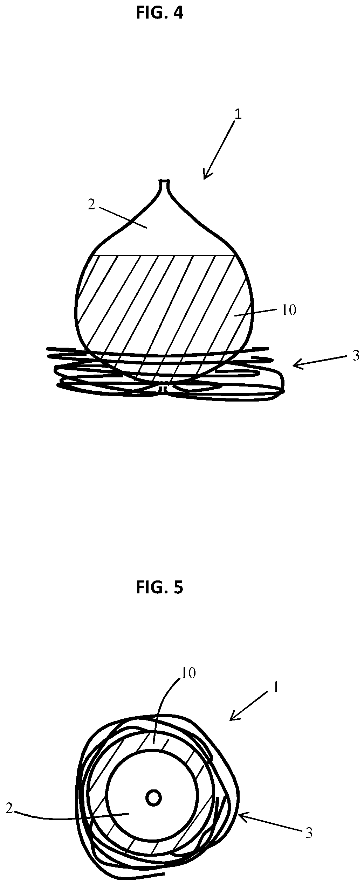

Once taken out of the wax bath, the layer of material will start to solidify as the temperature drops to room temperature. Before the solidification process has been completed, i.e. while the layer of material is maleable, the roots 3 are arranged to function as support for the bulb 2. The end result is shown in side view in Fig. 4 and in plan view in Fig. 5.

The roots have been arranged in a circular pattern with the bulb 2 in the middle, which is best seen in the plan view of Fig. 5.

Once the wax has fully solidified, the coating strengthens the roots 3 to keep them in the circular pattern and to hold the bulb 2. The plant 1 is now able to flower without the use of a pot or earth.

In the shown embodiment, arranging the roots to support the bulb means that at least some of the roots engage with the bulb to support the bulb in a location at a distance from the point of origin of the respective roots. However, in an alternative embodiment, the layer of material may provide sufficient strength such that engagement of the roots with the bulb, i.e. stem, at a location at a distance from the point of origin of the respective roots, is not required.

Although in the shown embodiment the roots 3 have been arranged in a circular pattern, it is envisaged that other shapes are also possible. Further, it is noted that the shown embodiment assumes that the bulb 2 needs to be supported from a flat surface, but it is also possible to arrange the roots such that the bulb can be supported from a convex or concave surface, e.g. when the plant is displayed on a concave plate or on a convex sphere or part thereof.

Although in the shown embodiment, the plant comprises a bulb, it will be clear to a skilled person that the invention can also be applied to any other plant having a stem with roots that can be arranged to support the stem, e.g. an orchid, for instance a Phalaenopsis orchid or any other plant with stem and roots. In the shown embodiment, the stem is a part of the bulb, so that by supporting the bulb, the stem is also supported.

Although the impression may be given throughout the specification that the roots need to be intact, it is clearly emphasized here that this is not necessarily the case. Roots need to be present in order to support the stem or bulb of the plant, but the roots may be cut to any desired length. Cutting the roots may even be done after coating or after arranging the roots, e.g. for ornamental reasons, as long as the integrity of the coating is not compromised.

Although in the shown embodiment, use is made of wax, it will be apparent that any suitable material may be used as long as it is able to provide sufficient strength and resistance to the roots while serving a decorative purpose. It may also be a combination of materials or layers. Hence, the coating step may have to be performed more than once.

Although in the shown embodiment, only a lower portion of the bulb is coated, it is explicitly mentioned here that the entire bulb may also be coated. In that case, it may be desirable to configure the coating such that the flowering shoot is able to penetrate the coating to allow the plant to flower e.g. by damaging the coating to a certain extent at the location of the flowering shoot or by weakening the coating, for instance by applying a reduced layer thickness, at the location of the flowering shoot. It is also possible that only a small portion of the bulb or stem is coated, e.g. only the part where the roots emerge from the stem or bulb.

Although in the shown embodiment, the roots have been coated completely, this is not necessarily the case. The roots only need to be coated such that they can be arranged or are arranged to function as support for the stem. In that case the roots may continue to grow and the layer of material being impenetrable for the roots then means that the integrity of the coating is maintained during growth of the roots so that the supporting function can be maintained. As an example, the coating may comprise holes or pores to allow the flowers to water. However, preferably, the coating completely covers the roots to prevent the roots from drying out.

In an embodiment of the invention, a foil or any other layer of material is provided between the roots and the coating, wherein the foil is configured to prevent the passage of water, but which allows the passage of small molecules as for instance, O₂ and/or N₂ and/or CO and/or CO₂, and wherein the coating provides the strength to support the plant via the roots, which coating may be penetrable for water and/or O₂ and/or N₂ and/or CO and/or CO₂.

## Claims

1. A method for coating a plant (1), comprising the following steps:
a) providing a clean plant with a stem (2) and roots (3); and
b) coating at least a lower portion of the stem with a layer of material (10); **characterized in that** step b) also comprises coating the roots with a layer of material (10), and the method further comprises the step of:
c) arranging the roots to function as support for the stem,
and **in that** the layer of material is configured to be impenetrable for the roots.

2. A method according to claim 1, wherein the stem is part of a bulb, wherein coating comprises coating at least a lower portion of the bulb and the roots with a layer of material, and wherein arranging comprises arranging the roots to function as support for the bulb.

3. A method according to claim 1, wherein the step of arranging the roots is carried out after the coating step.

4. A method according to claim 1, wherein the coating step is carried out after the step of arranging the roots.

5. A method according to any of the claims 1-4, wherein the step of providing a clean plant comprises the step of cleaning the stem, or bulb if applicable, and the roots to remove earth.

6. A method according to any of the claims 1-5, wherein the material used for coating is a wax (5).

7. A method according to any of the claims 1-6, wherein the step of coating at least a lower portion of the stem, or bulb if applicable, and the roots comprises the following steps:
c1) heating the material to above the melting point of the material;
c2) providing the heated material to at least the lower portion of the stem, or bulb if applicable, and the roots;
c3) solidifying the material by allowing the material to cool to room temperature.

8. A method according to claim 7, wherein arranging the roots is carried out during the solidifying step before the material fully solidifies.

9. A method according to any of claims 1-8, wherein coating comprises the step of dipping at least a lower portion of the stem, or bulb if applicable, and the roots into a liquid material.

10. A method according to any of the claims 1-9, wherein arranging the roots comprises the step of positioning the roots in a circular pattern with the stem, or bulb if applicable, in the middle seen in plan view.

11. A plant (1) with a stem (2) and roots (3), wherein at least a lower portion of the stem is provided with a layer of material (10), **characterized in that** also the roots are provided with a layer of material and that the roots are arranged to support the stem without the aid of a pot or earth, and **in that** the layer of material is configured to be impenetrable for the roots.

12. A plant according to claim 11, wherein the stem is part of a bulb, wherein at least a lower portion of the bulb and the roots are provided with a layer of material, and wherein the roots are positioned to support the bulb.

13. A plant according to claim 11 or 12, wherein the material is wax (5).

14. A plant according to any of the claims 11-13, wherein the roots are positioned in a circular pattern with the stem, or bulb if applicable, in the middle seen in plan view.

## Patentansprüche

1. Ein Verfahren zum Beschichten einer Pflanze (1), umfassend die folgenden Schritte:
a) Bereitstellung einer sauberen Pflanze mit einem Stiel (2) und Wurzeln (3); und
b) Beschichten mindestens eines unteren Teils des Stiels mit einer Materialschicht (10); gekennzeichnet in das Schritt b) umfasst auch das Beschichten der Wurzeln mit einer Materialschicht (10), und das Verfahren umfasst ferner den Schritt von:
c) Anordnen der Wurzeln als Unterstützung für den Stiel,
und in dass die Materialschicht so konfiguriert ist, dass sie für die Wurzeln undurchdringlich ist.

2. Ein Verfahren nach Anspruch 1, wobei der Stiel Teil eines Blumenzwiebel ist, wobei das Beschichten mindestens das Beschichten eines unteren Teils des Blumenzwiebel und der Wurzeln mit einer Materialschicht umfasst und wobei das Anordnen das Anordnen der Wurzeln umfasst, um als Träger zu fungieren für der Blumenzwiebel.

3. Ein Verfahren nach Anspruch 1, wobei der Schritt des Anordnens der Wurzeln nach dem Beschichtungsschritt ausgeführt wird.

4. Ein Verfahren nach Anspruch 1, wobei der Beschichtungsschritt nach dem Schritt des Anordnens der Wurzeln durchgeführt wird.

5. Ein Verfahren nach einem der Ansprüche 1-4, wobei der Schritt des Bereitstellens einer sauberen Pflanze den Schritt des Reinigens des Stiels oder der Blumenzwiebel, falls zutreffend, und der Wurzeln zum Entfernen der Erde umfasst.

6. Ein Verfahren nach einem der Ansprüche 1-5, wobei das zum Beschichten verwendete Material ein Wachs (5) ist.

7. Ein Verfahren nach einem der Ansprüche 1-6, wobei der Schritt des Beschichtens mindestens eines unteren Teils des Stiels oder der Blumenzwiebel, falls zutreffend, und der Wurzeln die folgenden Schritte umfasst:
c1) Erhitzen des Materials auf über den Schmelzpunkt des Materials;
c2) Bereitstellen des erhitzten Materials mindestens dem unteren Teil des Stiels oder der Blumenzwiebel, falls zutreffend, und den Wurzeln;
c3) Verfestigen des Materials durch Abkühlenlassen des Materials auf Raumtemperatur.

8. Ein Verfahren nach Anspruch 7, wobei das Anordnen der Wurzeln während des Verfestigungsschritts durchgeführt wird, bevor das Material vollständig verfestigt.

9. Verfahren nach einem der Ansprüche 1-8, wobei das Beschichten umfasst den Schritt des Eintauchens mindestens eines unteren Teils des Stiels oder der Blumenzwiebel, falls zutreffend, und der Wurzeln in ein flüssiges Material.

10. Ein Verfahren nach einem der Ansprüche 1-9, wobei das Anordnen der Wurzeln umfasst den Schritt des Positionierens der Wurzeln in einem kreisförmigen Muster mit dem Stiel, oder der Blumenzwiebel, falls zutreffend, in der Mitte gesehen in der Draufsicht.

11. Eine Pflanze (1) mit einem Stiel (2) und Wurzeln (3), wobei mindestens ein unterer Teil des Stiels mit einer Materialschicht (10) versehen ist, gekennzeichnet in dass auch die Wurzeln mit einer Schicht versehen sind von Material und dass die Wurzeln so angeordnet sind, dass sie den Stiel ohne die Hilfe eines Topfes oder einer Erde stützen, und dass die Materialschicht so konfiguriert ist, dass sie für die Wurzeln undurchdringlich ist.

12. Eine Pflanze nach Anspruch 11, wobei der Stiel ist Teil einer Blumenzwiebel, wobei mindestens ein unterer Teil der Blumenzwiebel und die Wurzeln mit einer Materialschicht versehen sind, und wobei die Wurzeln so positioniert sind, dass sie die Blumenzwiebel tragen.

13. Eine Pflanze nach Anspruch 11 oder 12, wobei das Material Wachs (5) ist.

14. Eine Pflanze nach einem der Ansprüche 11-13, wobei die Wurzeln in einem kreisförmigen Muster mit dem Stiel positioniert sind, oder der Blumenzwiebel falls zutreffend, in der Mitte gesehen in der Draufsicht.

## Revendications

1. Un procédé de revêtement d'une plante (1), comprenant les étapes suivantes:
a) fournir une plante propre avec une tige (2) et des racines (3); et
b) enrober au moins une partie inférieure de la tige d'une couche de matériau (10); **caractérisé en ce que** l'étape b) comprend également le revêtement des racines avec une couche de matériau (10) et le procédé suivant comprend l'étape de:
c) arranger les racines pour qu'elles servent de support à la tige,
et **en ce que** la couche de matière est configurée pour être impénétrable pour les racines.

2. Un procédé selon la revendication 1, dans lequel la tige fait partie d'un bulbe, dans lequel le revêtement comprend le revêtement d'au moins une partie inférieure du bulbe et les racines avec une couche de matériau, et dans lequel l'arrangement comprend arranger des racines pour qu'elles fonctionnent comme support pour le bulbe.

3. Un procédé selon la revendication 1, dans lequel l'étape d'arrangement des racines est réalisée après l'étape d'enrobage.

4. Un procédé selon la revendication 1, dans lequel l'étape d'enrobage est réalisée après l'étape d'arrangement des racines.

5. Un procédé selon l'une quelconque des revendications 1-4, dans lequel l'étape de fourniture d'une plante propre comprend l'étape de nettoyage de la tige, ou bulbe le cas échéant, et des racines pour enlever la terre.

6. Un procédé selon l'une quelconque des revendications 1-5, dans lequel le matériau utilisé pour le revêtement est une cire (5).

7. Un procédé selon l'une quelconque des revendications 1-6, dans lequel l'étape de revêtement d'au moins une partie inférieure de la tige, ou bulbe le cas échéant, et des racines comprend les étapes suivantes:
c1) chauffer le matériau au-dessus du point de fusion du matériau;
c2) fournir le matériau chauffé à au moins la partie inférieure de la tige, ou bulbe le cas échéant, et les racines;
c3) solidifier le matériau en le laissant refroidir à température ambiante.

8. Un procédé selon la revendication 7, dans lequel l'arrangement des racines est effectuée pendant l'étape de solidification avant que le matériau ne se solidifie complètement.

9. Un procédé selon l'une quelconque des revendications 1-8, dans lequel le revêtement comprend l'étape consistant à tremper au moins une partie inférieure de la tige, ou bulbe le cas échéant, et les racines dans un matériau liquide.

10. Un procédé selon l'une quelconque des revendications 1-9, dans lequel l'arrangement des racines comprend l'étape de positionnement des racines dans un motif circulaire avec la tige, ou le bulbe le cas échéant, au milieu vu en vue en plan.

11. Une plante (1) avec une tige (2) et des racines (3), dans laquelle au moins une partie inférieure de la tige est pourvue d'une couche de matériau (10), **caractérisée en ce que** les racines sont également pourvues d'une couche de matériau et que les racines sont arrangées pour supporter la tige sans l'aide d'un pot ou de terre, et **en ce que** la couche de matériau est configurée pour être impénétrable pour les racines.

12. Une plante selon la revendication 11, dans laquelle la tige fait partie d'un bulbe, dans laquelle au moins une partie inférieure du bulbe et les racines sont pourvues d'une couche de matériau, et dans laquelle les racines sont arrangées pour supporter le bulbe.

13. Une plante selon la revendication 11 ou 12, dans laquelle le matériau est de la cire (5).

14. Une plante selon l'une quelconque des revendications 11-13, dans laquelle les racines sont arrangées selon un motif circulaire avec la tige, ou bulbe le cas échéant, au milieu vu en vue en plan.
